# EUROPEAN PATENT SPECIFICATION

(11) **EP 0 480 090 B1**
(45) Date of publication and mention of the grant of the patent: **25.01.1995**
(21) Application number: 90119526.3
(22) Date of filing: 11.10.1990
(51) Int. Cl.: C08G 18/10, C08G 18/76, C08G 18/48

(54) **Polyisocyanate compositions and their use in the preparation of flexible polyurethane foams**
Polyisocyanat-Zusammensetzungen sowie ihre Verwendung zur Herstellung von Polyurethan-Weichschaumstoffen
Compositions de polyisocyanates et leur utilisation pour la préparation de mousses de polyuréthanes flexibles

(43) Date of publication of application: 15.04.1992
(73) Proprietor: ENICHEM S.p.A., 20124 Milano (IT)
(72) Inventor: Lunardon, Gianflavio, Dr., I-35139 Padova (IT); Gallo, Bruno, I-30174 Mestre, Venezia (IT)
(74) Representative: Weinhold, Peter, Dr.

(56) References cited:
- EP-A- 0 004 879
- EP-A- 0 010 850
- EP-A- 0 111 121
- EP-A- 0 344 551
- FR-A- 2 383 976
- US-A- 3 483 150

## Description

The present invention relates to polyisocyanate compositions and to their use in the preparation of flexible polyurethane foams.

The preparation of polyurethane resins of the foamed or compact type by means of the reaction of organic polyisocyanates with polyether-polyols in the presence of suitable catalysts and additives is well known from the relevant technical literature.

FR-A-2383976 discloses prepolymers for the preparation of polyurethane foams which are obtained by reacting diphenylmethane-diisocyanate (MDI) having a purity higher than 99% with a polyether-polyol having a molecular weight of from 240 to 1500 and a functionality of from 2.6 to 3.3. Storage stability of such prepolymers is improved by the addition of small amounts of a liquid or modified MDI, usually in amounts of from 1 to 20% by weight of the prepolymer. These prepolymers allow short residence times when reacted with long chain polyols in the preparation of polyurethane foams.

EP-A-0344551 describes liquid mixtures of polyisocyanates for the preparation of polyurethane foams. These mixtures are obtained by reacting polyisocyanates of the diphenylmethane-diisocyanate type with deficient amounts of a polyether-polyol having an average hydroxyl equivalent weight of 500 to 3000 and an average hydroxyl functionality higher than 4, said mixtures having an NCO content of 15 to 30% by weight. Foams prepared with these polyisocyanate mixtures have good mechanical properties.

In EP-A-0010850 a class of liquid polyisocyanates is disclosed, which are used, in particular, for the preparation of cold-aged flexible polyurethane resins characterized by minimal surface defects.

The polyisocyanate compositions disclosed in said EP-A comprise:
A. from 90 to 50% by weight of a reaction product of diphenyl-methane-diisocyanate and a polyoxyalkylene polyol having an average functionality of from 2 to 3 and containing from 50 to 100% by weight of a polyoxypropylene diol or triol having an equivalent weight of from 750 to 3000 and from 0 to 50% by weight of a polyoxyethylenediol or triol having a molecular weight of from 750 to 3000, the content of free NCO groups in said reaction product ranging from 8 to 26% by weight; and
B. from 10 to 50% by weight of a composition containing from 30 to 65% by weight of diphenyl-methane-diisocyanate and from 70 to 35% by weight of polymethylenepolyphenyl-polyisocyanates having a functionality higher than 2.

The above polyisocyanate compositions are used as the isocyanate component in the production of polyurethanes by reaction with organic polyols under conventional conditions or, more particularly, for the production of polyurethane foams in case suitable foaming agents are added to the reaction mixture during the polycondensation.

However, the foams obtained from these compositions display very closed cell structures, so that further treatments - such as beating or mangling - are required in order to break the cells of the foam and promote the escape of the foaming gases remaining inside said cells.

It has now been found that polyisocyanate compositions capable of yielding moulded, flexible polyurethane foams with a very open cell structure, which hence do not require any successive mangling or pressing operations, are those which are obtained by starting from modified polyisocyanates having a content of free NCO groups in the range of from 26.5 to 33% by weight.

Therefore, the object of the present invention are polyisocyanate compositions comprising:
(a) from 90 to 50% by weight of a reaction product of at least one organic diisocyanate and at least one polyether-polyol obtained from C₁-C₆-alkylene oxides and having an average functionality of at least 2 and an average molecular weight of from 1000 to 8000, said reaction product having a content of free NCO groups of from 26.5 to 33% by weight; and
(b) from 10 to 50% by weight of a mixture of polymethylene-polyphenyl-polyisocyanates of general formula (I): 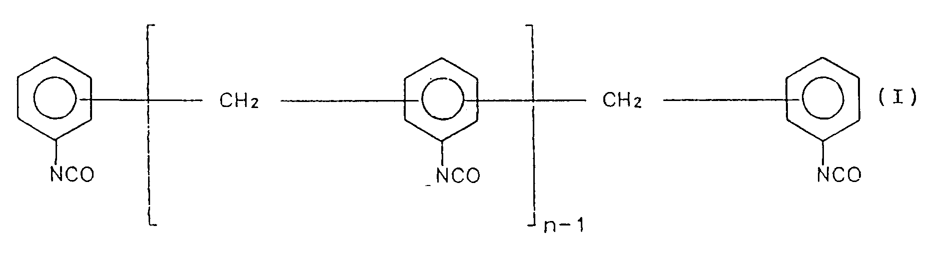 wherein n is an integer of at least 1,
   the mixture of polymethylene-polyphenyl-polyisocyanates having an average functionality of from 2.6 to 2.8.

More particularly, polyisocyanate compositions are preferred which comprise from 90 to 75% by weight of component (a) and from 10 to 25% by weight of component (b) and wherein the content of free NCO groups of component (a) ranges from 26.5 to 31%.

Any organic diisocyanates capable of yielding polyurethane foams can be used in the preparation of component (a) of the compositions of the present invention, although aromatic diisocyanates, cycloaliphatic diisocyanates and their corresponding alkyl-substituted derivatives are preferred.

In particular, low-molecular weight diisocyanates of general formula:

OCN - R - NCO (II)

wherein R represents an optionally alkyl-substituted cycloaliphatic or aromatic radical of from 5 to 25 (particularly 6 to 20) carbon atoms such as meta- and/or para-phenylene-diisocyanate, 2,4-toluene-diisocyanate, either alone or in admixture with its 2,6-toluene-diisocyanate isomer, 4,4'-diphenyl-methane-diisocyanate, either alone or in admixture with its 2,4'-diphenyl-methane-diisocyanate isomer; 4,4'-di-cyclohexyl-methane-diisocyanate, and 1-isocyanat-3-isocyanato-methyl-3,3,5-trimethyl-cyclohexane (isophorone-diisocyanate) are preferably used.

The diisocyanate of general formula (II) whose use is particularly preferred is 4,4'-diphenyl-methane-diisocyanate (MDI), either alone or in admixture with (preferably at least 5% by weight of) its 2,4'-isomer.

The polyether-polyols used according to the present invention in order to obtain the modified polyisocyanates of component (a) preferably have a linear or branched structure, an average molecular weight of from 1000 to 8000, and are derived from C₁-C₆-alkylene oxides or, even more preferred, from propylene oxide - optionally in admixture with not more than 50% by weight of ethylene oxide - in the presence or absence of cross linking agents such as glycerol, trimethylol-propane and pentaerythritol.

The preferred polyether-polyol is polyoxy-propylene-glycol (PPG) with linear structure and an average molecular weight of about 2000.

The modified polyisocyanates of component (a) may, for instance, be obtained at reaction temperatures of from about 50 to about 100°C, preferably from about 60 to about 80°C, using a weight ratio of organic diisocyanate to polyetherpolyol such as to yield an end product with a content of NCO groups comprised within the range specified above.

The polymethylene-polyphenyl-polyisocyanates of general formula (I) are well-known products which may, e.g., be obtained by means of the reaction of phosgene with aniline-formaldehyde condensates, and have an average functionality of from 2.6 to 2.8. Examples of such products are those available under the tradenames "Tedimon ®31" (Montedipe), "Suprasec® DNR" (I.C.I.) and "Desmodur® 44 V 20" (Bayer).

The polyisocyanate compositions according to the present invention can be used to prepare polyurethane resins, in particular flexible foamed resins, by means of their reaction with polyether-polyols according to conventional methods well-known to those skilled in the art.

Exemplary methods for producing flexible polyurethane foams are those described by Saunders and Frisch in "Polyurethanes, Chemistry and Technology", Interscience, New York 1964.

The polyurethane foams obtained from the polyisocyanate compositions according to the instant invention display, at the time of opening of the mould, a particularly open cell structure and therefore they do not require any successive treatments of mangling or pressing.

The following examples are to illustrate the present invention without being a limitation thereof.

### Example 1 (Comparative Example)

A modified MDI was obtained by means of the reaction, at 70°C and for 2 hours, of 59.2 parts by weight of a mixture of 4,4'-MDI and 2,4'-MDI (ratio 80/20) with 40.8 parts by weight of a linear PPG having an average molecular weight of about 2000, until the free NCO content reached 18.2%.

53.8 parts by weight of polymethylene-polyphenyl-polyisocyanate (Tedimon® 31) were added to this product, until a final composition which contained 22.7% of free NCO groups (Isocyanate 1) was obtained.

### Example 2 (Comparative Example)

A modified MDI was obtained by means of the reaction, at 70°C and for 2 hours, of 72.4 parts by weight of a mixture of 4,4'-MDI and 2,4'-MDI (ratio 80/20), with 27.6 parts by weight of a linear PPG having an average molecular weight of about 2000, until a free NCO content of 23.2% was reached.

53.8 parts by weight of polymethylene-polyphenyl-polyisocyanate (Tedimon® 31) were then added to this intermediate product, until a final composition which contained 25.8% of free NCO groups (Isocyanate 2) was obtained.

### Example 3 (Comparative Example)

A modified MDI was obtained by means of the reaction, at 70°C and for 2 hours, of 79.8 parts by weight of a mixture of 4,4'-MDI and 2,4'-MDI (ratio 80/20) with 20.2 parts by weight of a linear PPG having an average molecular weight of about 2000, until a free NCO content of 26.0% was reached.

100 parts by weight of polymethylene-polyphenyl-polyisocyanate (Tedimon® 31) were then added to this intermediate product, until a final composition containing 28.5% of free NCO groups (Isocyanate 3) was obtained.

### Example 4

A modified MDI was obtained by means of the reaction, at 70°C and for 2 hours, of 82.6 parts by weight of a mixture of 4,4'-MDI and 2,4'-MDI (ratio 80/20) with 17.4 parts by weight of a linear PPG having an average molecular weight of about 2000, until a free NCO content of 27.0% was obtained.

44.5 parts by weight of polymethylene-polyphenyl-polyisocyanate (Tedimon® 31) were then added to this intermediate product, until a final composition which contained 28.2% of free NCO groups (Isocyanate 4) was obtained.

### Example 5

A modified MDI was obtained by means of the reaction, at 70°C and for 2 hours, of 85.1 parts by weight of a mixture of 4,4'-MDI and 2,4'-MDI (ratio 80/20) with 14.9 parts by weight of a linear PPG having an average molecular weight of about 2000, until a free NCO content of 28.0% was reached.

45.8 parts by weight of polymethylene-polyphenyl-polyisocyanate (Tedimon® 31) were then added to this intermediate product, until a final composition which contained 29% of free NCO groups (Isocyanate 5) was obtained.

### Example 6

A modified MDI was obtained by means of the reaction, at 70°C and for 2 hours, of 92 parts by weight of a mixture of 4,4'-MDI and 2,4'-MDI (ratio 80/20) with 8 parts by weight of a linear PPG having an average molecular weight of about 2000, until a free NCO content of 30.6% was reached.

49.5 parts by weight of polymethylene-polyphenyl-polyisocyanate (Tedimon® 31) were then added to this intermediate product, until a final composition which contained 30.7% of free NCO groups (Isocyanate 6) was obtained.

### Example 7

The above compositions 1 to 6 were used for the production of foamed resins for car seats of standard geometry having a bulk density of 45 g/litre, by means of the reaction with a formulated polyol having the following composition:

| | parts b.w. |
|---|---|
| - polyoxypropyleneglycol/polyoxyethyleneglycol triol having an average molecular weight of about 6000 (1) | 100 |
| - H₂O | 3.1 |
| - catalyst DABCO® 33 LV (2) | 0.9 |
| - catalyst NIAX® A1 (3) | 0.3 |
| - silicone KS 43 (4) | 0.3 |
| - CFC 11 (5) | 12 |
| - NCO Index | 100 |

| | |
|---|---|
| (1) produced by Montedipe | |
| (2) produced by Air Products | |
| (3) produced by Union Carbide | |
| (4) produced by Bayer | |
| (5) trichlorofluoromethane | |

The moulding conditions were:

| | |
|---|---|
| - Temperature of the components: | 22°C |
| - Temperature of the mould: | 40°C |
| - Apparent bulk density of the foamed resin: | 46 g/litre. |

The observed properties of the resulting foams are reported in the following Table.

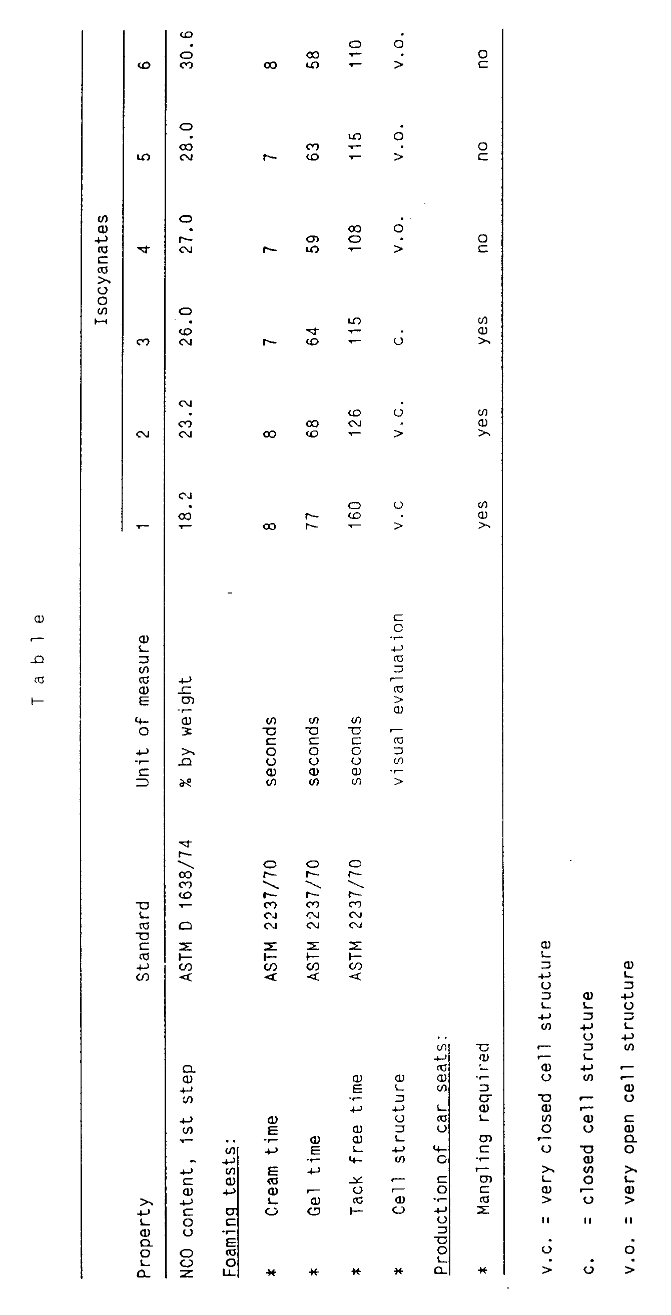

## Claims

1. Polyisocyanate compositions comprising:
(a) from 90 to 50% by weight of a reaction product of at least one organic diisocyanate and at least one polyether-polyol obtained from C₁-C₆-alkylene oxides and having an average functionality of at least 2 and an average molecular weight of from 1000 to 8000, said reaction product having a content of free NCO groups of from 26.5 to 33% by weight; and
(b) from 10 to 50% by weight of a mixture of polymethylene-polyphenyl-polyisocyanates of general formula (I): 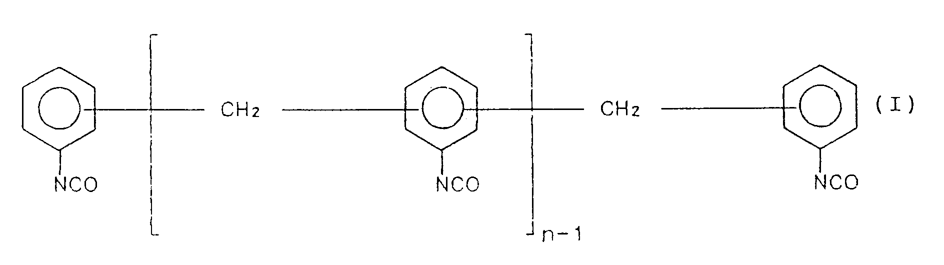 wherein n is an integer of at least 1,
the mixture of polymethylene-polyphenyl-polyisocyanates having an average functionality of from 2.6 to 2.8.

2. Compositions according to claim 1, comprising from 90 to 75% by weight of component (a) and from 10 to 25% by weight of component (b), the content of free NCO groups in component (a) ranging from 26.5 to 31%.

3. Compositions according to any one of the claims 1 and 2, wherein the organic diisocyanate is selected from aromatic and cycloaliphatic diisocyanates, their corresponding alkyl-substituted derivatives and mixtures thereof.

4. Compositions according to any one of claims 1 to 3, wherein the organic diisocyanate is 4,4'-diphenylmethane-diisocyanate, either alone or in admixture with at least 5% by weight of the corresponding 2,4'-diphenylmethane-diisocyanate isomer.

5. Compositions according to any one of claims 1 to 4, wherein the polyether-polyol has a linear or branched structure.

6. Compositions according to any one of claims 1 to 5, wherein the polyether-polyol is polyoxy-propylene-glycol with a linear structure and an average molecular weight of about 2000.

7. Compositions according to any one of claims 1 to 6, wherein the mixture of polymethylene-polyphenyl-polyisocyanates has been obtained by reaction of phosgene with aniline-formaldehyde condensates.

8. Use of the compositions according to any one of claims 1 to 7 for the preparation of flexible polyurethane foams.

## Patentansprüche

1. Polyisocyanat-Zusammensetzungen, die umfassen:
(a) von 90 bis 50 Gew.-% eines Reaktionsprodukts von mindestens einem organischen Diisocyanat mit mindestens einem Polyether-Polyol, erhalten von C₁-C₆-Alkylenoxiden und mit einer durchschnittlichen Funktionalität von mindestens 2 und einem durchschnittlichen Molekulargewicht von 1000 bis 8000, wobei das genannte Reaktionsprodukt einen Gehalt an freien NCO-Gruppen von 26,5 bis 33 Gew.-% aufweist; und
(b) von 10 bis 50 Gew.-% einer Mischung aus Polymethylen-polyphenyl-polyisocyanaten der allgemeinen Formel (I): 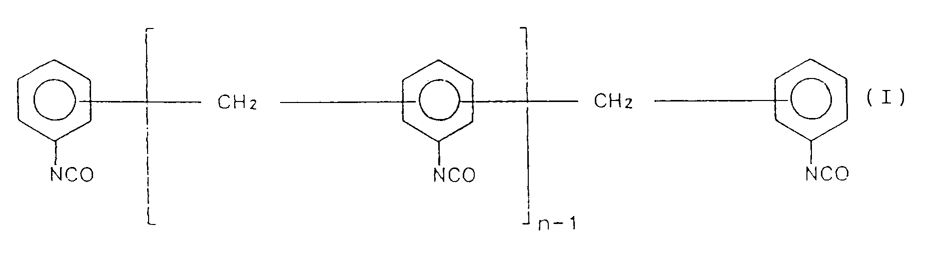 worin n eine ganze Zahl von mindestens 1 ist,
wobei die Mischung von Polymethyl-polyphenyl-polyisocyanaten eine durchschnittliche Funktionalität von 2,6 bis 2,8 hat.

2. Zusammensetzungen nach Anspruch 1, die von 90 bis 75 Gew.-% der Komponente (a) und von 10 bis 25 Gew.-% der Komponente (b) umfassen, wobei der Gehalt an freien NCO-Gruppen in der Komponente (a) im Bereich von 26.5 bis 31% liegt.

3. Zusammensetzungen nach einem der Ansprüche 1 und 2, worin das organische Diisocyanat ausgewählt wird aus aromatischen und zykloaliphatischen Diisocyanaten, deren entsprechenden Alkyl-substituierten Derivaten und Mischungen von diesen.

4. Zusammensetzungen nach einem der Ansprüche 1 bis 3, worin das organische Diisocyanat 4,4'-Diphenylmethan-diisocyanat, entweder allein oder in Mischung mit wenigstens 5 Gew.-% des entsprechenden 2,4'-Diphenylmethan-diisocyanat-Isomeren ist.

5. Zusammensetzungen nach einem der Ansprüche 1 bis 4, worin das Polyether-Polyol eine lineare oder verzweigte Struktur aufweist.

6. Zusammensetzungen nach einem der Ansprüche 1 bis 5, worin das Polyether-Polyol Polyoxypropylenglykol mit einer linearen Struktur und einem durchschnittlichen Molekular-gewicht von etwa 2000 ist.

7. Zusammensetzungen nach einem der Ansprüche 1 bis 6, worin die Mischung von Polymethylen-polyphenyl-polyisocyanaten durch Umsetzung von Phosgen mit Anilinformaldehy-Kondensaten erhalten wurde.

8. Verwendung der Zusammensetzungen nach einem der Ansprüche 1 bis 7 zur Herstellung von flexiblen Polyurethan-Schaumstoffen (Weichschaumstoffen).

## Revendications

1. Compositions de polyisocyanate comprenant:
(a) de 90 à 50% en poids d'un produit de la réaction d'au moins un diisocyanate organique et d'au moins un polyéther-polyol obtenu à partir d'oxydes d'alkylène en C₁ à C₆ et présentant une fonctionnalité moyenne au moins égale à 2 et un poids moléculaire moyen compris entre 1000 et 8000, ce produit de la réaction renfermant une teneur en groupes NCO libres comprise entre 26,5 et 33% en poids; et
(b) de 10 à 50% en poids d'un mélange de polyméthylène-polyphényl-polyisocyanates de formule générale (I): 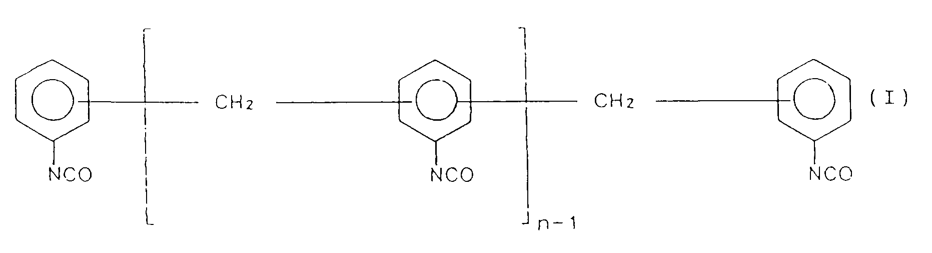 dans laquelle:
nest un nombre entier au moins égal à 1;
le mélange des polyméthylène-polyphényl-polyisocyanates présentant une fonctionnalité moyenne de 2,6 à 2,8.

2. Compositions selon la revendication 1, comprenant de 90 à 75% en poids de composant (a) et de 10 à 25% en poids de composant (b), la teneur en groupes NCO libres dans le composant (a) étant comprise entre 26,5 et 31%.

3. Compositions selon l'une quelconque des revendications 1 et 2, dans lesquelles le diisocyanate organique est choisi parmi les diisocyanates aromatiques et cycloaliphatiques, leur dérivés alkylsubstitués correspondants et leurs mélanges.

4. Compositions selon l'une quelconque des revendications 1 à 3, dans lesquelles le diisocyanate organique est le 4,4'-diphénylméthane-diisocyanate, soit seul, soit en mélange avec au moins 5% en poids de son isomère correspondant, le 2,4'diphénylméthane-diisocyanate.

5. Compositions selon l'une quelconque des revendications 1 à 4, dans lesquelles la structure du polyéther-polyol est linéaire ou ramifiée.

6. Compositions selon l'une quelconque des revendications 1 à 5, dans lesquelles le polyéther-polyol est le polyoxy-propylèneglycol présentant une structure linéaire et dont le poids moléculaire moyen est d'environ 2000.

7. Compositions selon l'une quelconque des revendications 1 à 6, dans lesquelles le mélange de polyméthylène-polyphényl-polyisocyanates a été obtenu par réaction de phosgène avec des condensats d'anilineformaldéhyde.

8. Utilisation des compositions selon l'une quelconque des revendications 1 à 7, pour la préparation de mousses de polyuréthane flexibles.
